# EUROPEAN PATENT APPLICATION

(11) **EP 4 570 755 A1**
(43) Date of publication of application: **18.06.2025**
(21) Application number: 24760603.1
(22) Date of filing: 22.02.2024
(51) Int. Cl.: C01B 32/174, H01M 4/62, H01M 4/13, H01M 10/052

(54) **CARBON NANOTUBE DISPERSION AND METHOD FOR PREPARING SAME**

(30) Priority: 23.02.2023 KR 20230024184
(71) Applicant: LG Chem, Ltd., Seoul 07336 (KR)
(72) Inventor: JANG, Young Jin, Daejeon 34122 (KR); WOO, Yu Jin, Daejeon 34122 (KR); MOK, Yeong Bong, Daejeon 34122 (KR); YANG, Young Jo, Daejeon 34122 (KR); KIM, Hyun Suk, Daejeon 34122 (KR); YOON, Ki Youl, Daejeon 34122 (KR); KIM, Eun Bum, Daejeon 34122 (KR)
(74) Representative: Hoffmann Eitle
(86) International application number: PCT/KR2024/002349
(87) International publication number: WO 2024/177414

(57) **Abstract**

The present invention relates to a carbon nanotube dispersion having low viscosity and comprising a small size of particles, the carbon nanotube dispersion comprising carbon nanotubes, a dispersant, and a dispersion medium, wherein the dispersant includes a first dispersant and a second dispersant in a weight ratio of 100:10-100:90, the first dispersant is a dispersant containing a cyclic amide group, the second dispersant is a polymer compound containing both a sulfone group and styrene, and the weight ratio of the carbon nanotubes to the dispersant is 100:50-100:500.

## Description

### TECHNICAL FIELD

### Cross-reference to Related Applications

This application claims the benefit of Korean Patent Application No. 10-2023-0024184, filed on February 23, 2023, in the Korean Intellectual Property Office, the contents of which are incorporated herein by reference.

### Technical Field

The present invention relates to a carbon nanotube dispersion and a method for preparing the same, more particularly, to a carbon nanotube dispersion with low viscosity and small particle size, and a method for preparing the same.

### BACKGROUND ART

According to the increase in the technical development and demand for mobile devices, demand for secondary batteries as an energy source is being rapidly increasing. Among the secondary batteries, lithium secondary batteries having high energy density, a high voltage, long cycle lifetime and a low self-discharge rate come into commercial use and are widely used. In addition, as an electrode for such high-capacity lithium secondary batteries, research is actively being conducted on methods for improving electrode density and manufacturing electrodes with higher energy density per unit volume.

Generally, high-density electrodes are formed by molding electrode active material particles with a size of several µm to tens of µm by high-pressure press. During the molding process, the particles are deformed, and the space between the particles may be reduced, and electrolyte permeability may be easily deteriorated.

In order to solve the above-described problems, conductive materials with excellent electrical conductivity and strength are used when manufacturing electrodes. Though the conductive material is placed between the electrode active materials and undergoes a molding process, micropores between the active material particles are maintained so that the electrolyte may easily penetrate, and electrical conductivity is excellent so that resistance in the electrode may be reduced. Among the conductive materials, the use of carbon nanotubes, a fibrous carbon-based conductive material that can further reduce electrode resistance by forming an electrically conductive path within the electrode, is increasing.

Carbon nanotubes, a type of fine carbon fiber, are tubular carbon fibers with a diameter of 1 µm or less, and are expected to be applied and commercialized in various fields due to high conductivity, high tensile strength and heat resistance due to the specific structure thereof. However, carbon nanotubes have problems of low dispersibility and arising aggregation phenomenon due to strong van der Waals attraction between carbon nanotubes due to the high specific surface area thereof.

To solve the problems, a method for dispersing carbon nanotubes in a dispersion medium through mechanical dispersion treatment such as ultrasonic treatment has been proposed. However, in the case of the mechanical dispersion treatment method, there is a problem in that the carbon nanotubes aggregate as soon as the ultrasonic irradiation is terminated.

Accordingly, there is a need to develop a method for preparing a carbon nanotube dispersion that can improve the dispersibility of carbon nanotubes, have low viscosity and a small particle size of particles contained in the dispersion.

### DISCLOSURE OF THE INVENTION

### TECHNICAL PROBLEM

The present invention is to solve the above-described problems and to provide a carbon nanotube dispersion with excellent dispersibility and a small particle size of particles contained in the carbon nanotube dispersion, by including a dispersant containing a cyclic amide group and a polymer compound containing both a sulfonyl group and styrene.

In addition, the present invention is to provide a negative electrode slurry composition for a lithium secondary battery, including the carbon nanotube dispersion.

In addition, the present invention is to provide a method for preparing the carbon nanotube dispersion.

### TECHNICAL SOLUTION

To solve the above-described task, the present invention provides a carbon nanotube dispersion.
[1] The present invention provides a carbon nanotube dispersion comprising carbon nanotubes, a dispersant and a dispersion medium, wherein the dispersant comprises a first dispersant and a second dispersant in a weight ratio of 100:10 to 100:90, the first dispersant is a dispersant comprising a cyclic amide group, the second dispersant is a polymer compound comprising both a sulfonyl group and styrene, and a weight ratio of the carbon nanotubes and the dispersant is 100:50 to 100:500.
[2] The present invention provides the carbon nanotube dispersion according to [1], wherein a specific surface area (BET) of the carbon nanotubes is 800 m²/g or more.
[3] The present invention provides the carbon nanotube dispersion according to [1] or [2], wherein the carbon nanotubes are single-walled carbon nanotubes.
[4] The present invention provides the carbon nanotube dispersion according to any one of [1] to [3], wherein 0.1 parts by weight to 5 parts by weight of the carbon nanotubes are comprised on the basis of 100 parts by weight of the carbon nanotube dispersion.
[5] The present invention provides the carbon nanotube dispersion according to any one of [1] to [4], wherein the first dispersant is one or more selected from the group consisting of polyvinylpyrrolidone, poly-N-vinyl-5-methoxazolidon, polyvinylaziridinone, polyvinylazetidinone, polyvinylpiperidone, polyvinylcaprolactam, poly(3-methylene-2-pyrrolidone), poly(N-methyl-3-methylene-2-pyrrolidone) and polyvinylphthalimide.
[6] The present invention provides the carbon nanotube dispersion according to any one of [1] to [5], wherein the second dispersant is one or more selected from the group consisting of polystyrene sulfonic acid, salts of polystyrene sulfonic acid and sulfonate styrene-maleic acid copolymers.
[7] The present invention provides the carbon nanotube dispersion according to any one of [1] to [6], wherein the second dispersant is one or more selected from the group consisting of sulfonated polystyrene, sulfonated styrene maleic acid copolymers, sodium polystyrenesulfonate, polystyrene sulfonic acid, and ammonium polystyrenesulfonate.
[8] The present invention provides the carbon nanotube dispersion according to any one of [1] to [7], wherein the dispersant comprises the first dispersant and the second dispersant in a weight ratio of 100:20 to 100:80.
[9] The present invention provides the carbon nanotube dispersion according to any one of [1] to [8], wherein a weight ratio of the carbon nanotubes and the dispersant is 100:100 to 100:250.
[10] The present invention provides the carbon nanotube dispersion according to any one of [1] to [9], wherein the dispersion medium is one or more selected from the group consisting of an amide-based polar organic solvent, an alcohol-based solvent, a glycol-based solvent, a glycol ether-based solvent, a ketone-based solvent, an ester-based solvent, and an aqueous solvent.
[11] The present invention provides the carbon nanotube dispersion according to any one of [1] to [10], wherein a viscosity increasing ratio of the carbon nanotube dispersion after standing for 1 week at 25°C is 20% or less.
[12] The present invention provides the carbon nanotube dispersion according to any one of [1] to [11], wherein the carbon nanotube dispersion comprises carbon nanotube aggregated particles with an average particle size (D50) of 0.5 µm to 5.4 µm.
[13] The present invention provides the carbon nanotube dispersion according to any one of [1] to [12], wherein the carbon nanotube dispersion comprises carbon nanotube aggregated particles with an average particle size (D90) of 1.5 µm to 15.0 µm.

In addition, in order to solve the other task, the present invention provides an electrode slurry composition for a lithium secondary battery.

[14] The present invention provides an electrode slurry composition for a lithium secondary battery, the composition comprising the carbon nanotube dispersion according to any one of [1] to [13] and an electrode active material.

In addition, in order to solve the other task, the present invention provides a method for preparing a carbon nanotube dispersion.

[15] The present invention provides a method for preparing the carbon nanotube dispersion of any one of [1] to [13], the method comprising: (1) a step of mixing carbon nanotubes, a dispersant and a dispersion medium to prepare a mixture; and (2) a step of dispersing the mixture, wherein the dispersant comprises a first dispersant and a second dispersant in a weight ratio of 100:10 to 100:90, the first dispersant is a dispersant comprising a cyclic amide group, the second dispersant is a polymer compound comprising both a sulfonyl group and styrene, and a weight ratio of the carbon nanotubes and the dispersant is 100:50 to 100:500.

### ADVANTAGEOUS EFFECTS

The carbon nanotube dispersion of the present invention includes a dispersant containing a cyclic amide group and a polymer compound containing both a sulfonyl group and styrene, and has excellent dispersibility of the carbon nanotubes, low viscosity and a small particle size of carbon nanotubes contained in the dispersion, and thus shows advantageous effects in accomplishing the storage and use of the carbon nanotube dispersion and a coating layer with a uniform thickness.

### BEST MODE FOR CARRYING OUT THE INVENTION

Words or terms used in the present description and claims shall not be interpreted as the meaning defined in commonly used dictionaries. The words or terms should be interpreted as having a meaning that is consistent with the technical idea of the present invention, based on the principle that an inventor may properly define the meaning of the words or terms to best explain the invention.

The terminology used in the present description is for the purpose of describing exemplary embodiments only and is not intended to limit the present invention. Singular expressions include plural expressions unless the context clearly indicates otherwise.

In the present description, terms such as "comprise," "include," and "have" are intended to designate the presence of implemented features, numbers, steps, components or a combination thereof, and it should be understood that the terms do not preclude the possibility of the presence or addition of one or more other features, numbers, steps, components or a combination thereof.

In the present description, "%" means wt% unless explicitly stated otherwise.

In the present description, an average particle size "D50" means a particle size corresponding to 50% of an accumulated volume, and "D90" means a particle size corresponding to 90% of an accumulated volume. The "D50" and "D90" may be measured using, for example, a laser diffraction method. The laser diffraction method is generally capable of measuring the particle size from a submicron region to several millimeters, and may obtain results with high reproducibility and high resolution.

In the present description, a "specific surface area" is measured by a BET method and may particularly be computed from the amount of nitrogen gas absorption under the temperature of a liquid nitrogen (77K) using BELSORP-mino II of BEL Japan.

Hereinafter, the present invention will be explained in particular.

The carbon nanotube dispersion according to the present invention is a carbon nanotube dispersion comprising carbon nanotubes (CNT), a dispersant and a dispersion medium, wherein the dispersant comprises a first dispersant and a second dispersant in a weight ratio of 100:10 to 100:90, the first dispersant is a dispersant containing a cyclic amide group, the second dispersant is a polymer compound containing both a sulfonyl group and styrene, and a weight ratio of the carbon nanotubes and the dispersant is 100:50 to 100:500.

### Carbon Nanotube Dispersion

Hereinafter, each component of the carbon nanotube dispersion of the present invention will be described in particular.

### (1) Carbon Nanotubes

The term "carbon nanotubes" used in the present invention is a secondary structure formed by aggregating carbon nanotube units in whole or in part to form a bundle, and the carbon nanotube units have graphite sheets having a cylinder shape with a nano size diameter and have a sp2 bonding structure. In this case, according to the angle and structure of the rolled-up graphite sheets, the properties of a conductor or a semiconductor may be shown. The carbon nanotube units may be classified into single-walled carbon nanotubes (SWCNT), double-walled carbon nanotubes (DWCNT) and multi-walled carbon nanotubes (MWCNT) according to the bonding number forming a wall.

The term "bundle type" used in the present invention refers to a secondary shape of a bundle or rope type, in which multiple carbon nanotube units are arranged in parallel, wherein the axes of the length direction of the units are arranged in substantially the same direction, or twisted or entangled after the arrangement. A "Non-bundle type or entangled type" refers to an entangled type of carbon nanotube units without a certain shape like a bundle or rope type.

Carbon nanotubes have high conductivity, but have high cohesiveness due to van der Waals forces that occur between carbon nanotubes. If a conductive material is aggregated, a conductive path may not be properly formed, and a relatively more conductive material is used, which reduces the amount of an active material and deteriorates the performance of an electrode. Accordingly, there were difficulties in commercializing carbon nanotubes as conductive materials.

The carbon nanotube dispersion according to the present invention includes a dispersant containing a cyclic amide group and a polymer compound containing both a sulfonyl group and styrene, and may suppress the generation of the change in viscosity over time of the carbon nanotube dispersion, thereby exhibiting a low viscosity increasing ratio and advantageous effects in storing and using the carbon nanotube dispersion. In addition, as dispersibility is improved and carbon nanotube aggregates with a small particle size are dispersed, the carbon nanotube dispersion may exhibit uniform coatability.

In addition, if the carbon nanotube dispersion according to the present invention is applied to the preparation of an electrode slurry, carbon nanotubes are positioned uniformly between active materials, and the minute spaces between electrode active materials may be maintained constant during preparing an electrode by coating and drying the electrode slurry and rolling. In addition, since the carbon nanotubes are distributed uniformly without aggregation, a conductive path may be sufficiently formed with a small amount of the carbon nanotubes.

The carbon nanotube dispersion according to an embodiment of the present invention may include one or more among single-walled, double-walled and multi-walled carbon nanotube units, particularly, single-walled carbon nanotubes (SWCNT) .

The carbon nanotubes may have a specific surface area (BET) of 800 m²/g or more, particularly, a specific surface area (BET) of 800 m²/g to 2,000 m²/g. Since the carbon nanotube dispersion of the present invention includes a dispersant containing a cyclic amide group and a polymer compound containing both a sulfonyl group and styrene, excellent dispersibility is exhibited, and accordingly, excellent dispersibility with respect to carbon nanotubes having a high specific surface area (BET) of 800 m²/g or more may be exhibited, the carbon nanotube dispersion may exhibit low viscosity, and the effect of a little change in viscosity over time may be shown.

The carbon nanotubes may be included in 0.1 parts by weight to 5 parts by weight, particularly, 0.2 parts by weight to 3 parts by weight, more particularly, 0.4 parts by weight to 2 parts by weight on the basis of 100 parts by weight of the conductive material dispersion.

Since the carbon nanotube dispersion according to an embodiment of the present invention includes a dispersant having excellent dispersibility, excellent dispersibility may be shown with respect to carbon nanotubes having a high specific surface area, and carbon nanotubes having a high specific surface area may be dispersed uniformly. The carbon nanotube dispersion may have the high content of carbon nanotubes like the above-described range compared to the conventional generally used one. If a carbon nanotube dispersion having the low carbon nanotube content is used for preparing an electrode slurry, the solid content of the electrode slurry prepared may decrease, the thickness (wet thickness) after coating the electrode slurry and prior to drying may become thick, and a rolling ratio measured after conducting subsequent drying and rolling treatment may become high, which may induce a large difference in the thickness ratio before and after the drying and rolling. Like this, if the rolling ratio increases, components in the slurry including a positive electrode active material may be damaged during processing, and defects of deteriorating the performance of an electrode may occur.

### (2) Dispersant

The carbon nanotube dispersion according to the present invention includes a first dispersant and a second dispersant together in a weight ratio of 100:10 to 100:90, as dispersants for improving the dispersibility of the carbon nanotubes. In addition, the first dispersant is a dispersant including a cyclic amide group, and the second dispersant is a polymer compound including both a sulfonyl group and styrene.

The dispersant including a cyclic amide group, included as the first dispersant, and the polymer compound including both a sulfonyl group and styrene, included as the second dispersant are dispersants in the carbon nanotube dispersion, which play the role of increasing the dispersibility of the carbon nanotubes, and may serve suppressing effects of the increase in viscosity and the change in viscosity over time of the carbon nanotube dispersion.

Particularly, the carbon nanotube dispersion according to the present invention additionally includes the polymer compound including both a sulfonyl group and styrene, as the second dispersant, in addition to the dispersant including a cyclic amide group, as the first dispersant, and may exhibit excellent dispersibility compared to a carbon nanotube dispersion including only the conventionally commonly used dispersant, and may exhibit low particle aggregation of a slurry composition, low sedimentation rate, low viscosity and excellent adhesiveness with a separator base.

Since the second dispersant includes both a sulfonyl group and an aromatic ring together in a molecular structure, the viscosity of a carbon nanotube dispersion, particularly, an aqueous carbon nanotube dispersion may be reduced, and viscosity increase over time may be significantly improved compared to the conventional case, due to the bulky structure of the compound and the influence by the sulfonyl group.

As the first dispersant, the dispersant containing a cyclic amide group may be used, and through this, further improved viscosity improving effect and the suppressing effect of viscosity change over time may be exhibited. The dispersant containing a cyclic amide group may be dissolved in water and may be, for example, one or more selected from the group consisting of polyvinylpyrrolidone, poly-N-vinyl-5-methoxazolidon, polyvinylaziridinone, polyvinylazetidinone, polyvinylpiperidone, polyvinylcaprolactam, poly(3-methylene-2-pyrrolidone), poly(N-methyl-3-methylene-2-pyrrolidone) and polyvinylphthalimide.

In addition, as the second dispersant, a polymer compound including both a sulfonyl group and styrene may be used, and the polymer compound including both a sulfonyl group and styrene may be one or more selected from the group consisting of polystyrene sulfonic acid, salts of polystyrene sulfonic acid and sulfonate styrene-maleic acid copolymers.

The second dispersant may be, for example, one or more selected from the group consisting of sulfonated polystyrene, sulfonated styrene maleic acid copolymers, sodium polystyrenesulfonate, polystyrene sulfonic acid and ammonium polystyrenesulfonate.

If the dispersant includes the dispersant including a cyclic amide group as the first dispersant, and the polymer compound including both a sulfonyl group and styrene as the second dispersant, due to the interaction between the aromatic ring and the carbon nanotubes in the carbon nanotube dispersion and the electrostatic shielding effect of the sulfonyl group that is negatively charged, the dispersibility of the carbon nanotubes may be improved, the viscosity of the dispersion may be reduced, the aggregation of the carbon nanotubes may be reduced, and the particles contained in the dispersion may become a level having a small particle size.

The dispersant includes the first dispersant and the second dispersant in a weight ratio of 100:10 to 100:90, and may particularly include in a weight ratio of 100:10 to 100:80 or 100:20 to 100:80, more particularly, in a weight ratio of 100:20 to 100:50. If the carbon nanotube dispersion includes the first dispersant and the second dispersant in the weight ratio, as the dispersants, carbon nanotubes may be dispersed uniformly in the carbon nanotube dispersion, and the particle size of particles contained in the carbon nanotube dispersion may become a small level with low viscosity.

The weight ratio of the carbon nanotubes and the dispersant may be 100:80 to 100:500, particularly, 100:100 to 100:400, 100:100 to 100:300, 100:100 to 100:250, 100:120 to 100:300, or 100:120 to 100:250, more particularly, 100:120 to 100:200.

If the dispersant is included in an excessive amount beyond the range, due to the excessive dispersant, if the carbon nanotube dispersion is applied to an electrode, the conductivity of the electrode may be inhibited, and the dispersant may act as impurities in the electrode. On the contrary, if the dispersant is included in a small amount compared to the range, dispersibility increasing effect, viscosity decreasing effect and the suppressing effect of the aggregation of carbon nanotubes may become insufficient.

### (3) Dispersion Medium

The dispersion medium is a dispersion medium for dispersing the carbon nanotubes and the dispersant, and carbon nanotubes are primarily dispersed to be provided as a carbon nanotube dispersion, in order to prevent aggregation in case of applying the carbon nanotubes with a power type as they are to an electrode slurry composition.

The dispersion medium may use one that can dissolve or disperse the carbon nanotubes and the dispersant at a certain level or higher. The dispersion medium may be included in an amount such that the electrode slurry composition may have proper viscosity in view of the coatability of the electrode slurry composition subsequently prepared using the carbon nanotube dispersion.

The dispersion medium may use any one commonly used in this art for the purpose of dispersing the carbon nanotubes and the dispersant, without specific limitation, and may be, for example, at least one selected from the group consisting of an amide-based polar organic solvent, an alcohol-based solvent, a glycol-based solvent, a glycol ether-based solvent, a ketone-based solvent, an ester-based solvent and an aqueous solvent.

The amide-based polar organic solvent may be one or more selected from the group consisting of dimethyl formamide (DMF), diethyl formamide, dimethyl acetamide (DMAc), N-methyl pyrrolidone (NMP), 3-methoxy-N,N-dimethylpropanamide (Equamide M100, product of idemitsu Kosan Co.) and 3-butoxy-N,N-dimethylpropanamide (Equamide B100, product of idemitsu Kosan Co.).

The alcohol-based solvent may be at least one selected from the group consisting of methanol, ethanol, 1-propanol, 2-propanol (or isopropyl alcohol), 1-butanol, 2-methyl-1-propanol, 2-butanol, 1-methyl-2-propanol, pentanol, hexanol, heptanol, octanol, glycerin, trimethylolpropane, pentaerythritol and sorbitol.

The glycol-based solvent may be at least one selected from the group consisting of ethylene glycol, diethyl glycol, triethylene glycol, propylene glycol, 1,3-propanediol, 1,3-butanediol, 1,5-pentanediol and hexylene glycol.

The glycol ether-based solvent may be at least one selected from the group consisting of ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether and tetraethylene glycol monobutyl ether.

The ketone-based solvent may be at least one selected from the group consisting of acetone, methyl ethyl ketone, methyl propyl ketone and cyclopentanone.

The ester-based solvent may be at least one selected from the group consisting of ethyl acetate, gamma-butyrolactone and epsilon-propiolactone.

In addition, the aqueous solvent may be water.

The carbon nanotube dispersion of the present invention, including the above-described components has excellent dispersibility, and the viscosity of the dispersion may be low and the particle size of particles contained therein may be small.

If measured at 1 rpm using Rotor 1 at 25°C using a viscometer (product of TOKI SANGYO Co., viscometer TV-25), the carbon nanotube dispersion may have a viscosity of 1,000 to 11,000 cps, particularly, 3,000 to 10,500 cps, more particularly, 5,000 to 10,000 cps. If the carbon nanotube dispersion has the viscosity in the range, an electrode slurry may be prepared more easily by using the same, and an electrode slurry including the carbon nanotube dispersion may have proper viscosity for forming an electrode.

In addition, if measured at 1 rpm using Rotor 1 at 25°C using a viscometer (product of TOKI SANGYO Co., viscometer TV-25) after 1 week from the preparation, the carbon nanotube dispersion may have a viscosity of 1,000 to 12,000 cps, particularly, 3,000 to 11,500 cps, more particularly, 5,000 to 11,000 cps.

In addition, after standing for 1 week at 25°C, the carbon nanotube dispersion may have the increasing ratio of the viscosity of 20% or less, particularly, 0.1% to 20%, 0.1% to 18%, 0.5% to 18%, more particularly, 1.0% to 16%.

The carbon nanotube dispersion may include carbon nanotubes in a particulate form, and the carbon nanotubes in a particulate form may be formed by aggregating multiple carbon nanotubes.

The carbon nanotube dispersion of the present invention includes the first dispersant and the second dispersant in the above-described constant weight ratio, and the amount of the carbon nanotubes and the total amount of the first dispersant and the second dispersant satisfy the above-described constant weight ratio, and thus, the carbon nanotubes are uniformly dispersed in the dispersion, while reducing the aggregation of the carbon nanotubes. Accordingly, the carbon nanotube dispersion of the present invention may include particles having a small particle size, particularly, the aggregated particles of the carbon nanotubes having a small particle size.

The average particle size (D50) of the carbon nanotube aggregated particles dispersed in the carbon nanotube dispersion may be, for example, 0.5 µm to 5.5 µm, particularly, 1 µm to 5 µm, more particularly, 1.5 µm to 5 µm.

In addition, the average particle size (D90) of the carbon nanotube aggregated particles may be, for example, 2 µm to 15 µm, particularly, 3 µm to 14 µm, more particularly, 5 µm to 13 µm.

In order to measure the average particle size of the carbon nanotubes, the particle size of the carbon nanotube aggregated particles may be measured using a laser diffraction method.

### Method for Preparing Carbon Nanotube Dispersion

Hereinafter, the method for preparing a carbon nanotube dispersion will be explained. The method for preparing a conductive material dispersion according to the present invention comprises: (1) a step of mixing carbon nanotubes, a dispersant and a dispersion medium to prepare a mixture; and (2) a step of dispersing the mixture. Here, the dispersant comprises a first dispersant and a second dispersant in a weight ratio of 100:10 to 100:90, the first dispersant is a dispersant comprising a cyclic amide group, the second dispersant is a polymer compound comprising both a sulfonyl group and styrene, and a weight ratio of the carbon nanotubes and the dispersant is 100:50 to 100:500.

In step (1), carbon nanotubes, a dispersant and a dispersion medium are mixed to prepare a mixture.

The step for preparing the mixture may be performed at temperature conditions where physical properties including the viscosity of the mixture are not changed by the evaporation of the dispersion medium, for example, at a temperature of 50°C or less, more particularly, 5°C to 50°C.

In step (2), the mixture is dispersed to prepare a carbon nanotube dispersion.

The dispersion may be performed by a method using milling such as a ball mill, a bead mill, a disc mill, a basket mill, and a high pressure homogenizer, more particularly, by a milling method using disc mill or a high pressure homogenizer.

During milling by the bead mill, the size of beads may be suitably determined depending on the type and amount of the carbon nanotubes and the type of the dispersant, and particularly, the diameter of the beads may be 0.1 mm to 5 mm, more particularly, 0.5 mm to 4 mm. In addition, the milling process may be performed at a rate of 1,000 rpm to 15,000 rpm, more particularly, at a rate of 2,000 rpm to 12,000 rpm. The dispersion process may be performed according to the dispersion degree of the carbon nanotube dispersion, and may be performed for 30 minutes to 120 minutes, more particularly, for 60 minutes to 90 minutes.

The milling by the high pressure homogenizer (high pressure disperser) may be performed by, for example, pressurizing the mixture with a plunger pump of the high pressure homogenizer and pushing it through the gap of a homogenization valve, and by the force of cavitation, shear, impact and explosion during passing through the gap. The pressure of the high pressure homogenizer may be 5,000 psi to 40,000 psi, particularly, 10,000 psi to 30,000 psi, more particularly, 14,000 psi to 25,000 psi. The dispersion through the high pressure homogenizer may be performed for 1 to 15 times, particularly, 2 to 10 times, more particularly, 3 to 7 times.

### Electrode Slurry Composition

In addition, the present invention provides an electrode slurry composition for a lithium secondary battery, including the carbon nanotube dispersion and an electrode active material.

The electrode slurry composition for a lithium secondary battery may be a positive electrode slurry composition or a negative electrode slurry composition, particularly, a negative electrode slurry composition.

The electrode slurry composition for a lithium secondary battery may include the carbon nanotube dispersion, a positive electrode active material or a negative electrode active material as the electrode active material, a binder, if needed, a solvent and/or other additives.

As the positive electrode active material, positive electrode active materials well-known in this art may be used without limitation, and may use, for example, lithiumcobalt-based oxides, lithiumnickel-based oxides, lithiummanganese-based oxides, lithiumironphosphor oxides, lithium nickelmanganesecobalt-based oxides or a combination thereof. Particularly, as the positive electrode active material, LiCoO₂, LiNiO₂, LiMn₂O₄, LiCoPO₄, LiFePO₄, LiNiₐMn_{b}Co_{c}O₂ (here, 0 < a, b, c < 1), without limitation.

As the negative electrode active material, at least one or at least two negative electrode active materials selected from the group consisting of: carbonaceous materials such as natural graphite and artificial graphite; lithium-containing titanium composite oxide (LTO); metals (Me) such as Si, Sn, Li, Zn, Mg, Cd, Ce, Ni and Fe; alloys composed of the metals (Me); oxides (MeOₓ) of the metals (Me); and composites of the metals (Me) and carbon, may be included. The negative electrode active material may be included in 60 to 98 wt%, more preferably, 70 to 98 wt% based on the total weight of the solid content excluding the solvent in the negative electrode slurry.

The binder is a component assisting the bond between the active material and the conductive material, and the bonding to a current collector and is generally added in 1 to 30 wt% based on the total weight of a mixture including an electrode active material. Examples of the binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene ter polymer (EPDM), a sulfonated EPDM, a styrene-butadiene rubber, a fluoro rubber, and various copolymer.

The solvent may be an organic solvent including N-methyl pyrrolidone (NMP), dimethyl formamide (DMF), acetone, dimethyl acetamide, or the like, or water, and one or a mixture of two or more thereof may be used. The amount of the solvent may be sufficient if an electrode active material, a binder and a conductive material are dissolved or dispersed considering the application thickness of a slurry and a preparation yield.

The viscosity controlling agent may be carboxymethyl cellulose, polyacrylic acid, or the like, and the viscosity of the electrode slurry may be controlled so that the preparation of the electrode slurry and a coating process on the electrode current collector may be easy due to the addition.

The filler is a component suppressing the expansion of the electrode and selectively used, and uses any one that does not induce chemical change to the battery and is a fibrous material, without specific limitation. For example, olefin-based polymers such as polyethylene and polypropylene; and fibrous materials such as glass fiber and carbon fiber are used.

If the electrode slurry composition is the composition of a positive slurry for forming a positive electrode, the composition of a positive electrode is applied on a positive electrode current collector, dried and undergone rolling to manufacture a positive electrode. Otherwise, the positive electrode slurry may be cast on a separate support, and then, a film obtained by separating from the support may be laminated on the positive electrode current collector.

The thickness of the positive electrode active material layer formed by the positive electrode slurry may be changed depending on a loading amount, a loading rate, or the like for applying the positive electrode slurry.

The positive electrode current collector may generally have a thickness of 3 µm to 500 µm. The positive electrode current collector may include a material having high conductivity without inducing chemical change to the battery, without specific limitation. For example, stainless steel, aluminum, nickel, titanium, baked carbon, or aluminum or stainless steel surface treated with carbon, nickel, titanium, silver or the like, may be used. In addition, the positive electrode current collector may reinforce the adhesive strength of the positive electrode active material by forming minute embossing on the surface of the positive electrode current collector, and various types including a film, a sheet, a foil, a net, a porous body, a foamed body and a nonwoven fabric may be used.

If the electrode slurry composition is the composition of a negative slurry for forming a negative electrode, the composition of a negative electrode may be applied on a negative electrode current collector, dried and undergone rolling to manufacture a negative electrode. Otherwise, the negative electrode slurry may be cast on a separate support, and then, a film obtained by separating from the support may be laminated on the negative electrode current collector.

The thickness of the negative electrode active material layer formed by the negative electrode slurry may be changed depending on a loading amount, a loading rate, or the like, for applying the negative electrode slurry.

The negative electrode current collector may generally have a thickness of 3 µm to 500 µm. The negative electrode current collector may use any one having high conductivity without inducing chemical change to the battery, without specific limitation. For example, copper, stainless steel, aluminum, nickel, titanium, baked carbon, copper or stainless steel surface treated with carbon, nickel, titanium, silver or the like, or an aluminum-cadmium alloy may be used. In addition, like the negative electrode current collector, minute embossing may be formed on the surface of the negative electrode current collector to reinforce the adhesive strength of the negative electrode active material, and various types including a film, a sheet, a foil, a net, a porous body, a foamed body and a nonwoven fabric may be used.

### Lithium Secondary Battery

A lithium secondary battery includes a positive electrode, a negative electrode, a separator disposed between the positive electrode and the negative electrode, and an electrolyte. Since the positive electrode and the negative electrode are the same as described above, particular explanation thereon will be omitted.

The separator is for separating the negative electrode and the positive electrode and for providing the moving passage of lithium ions, and uses any separators used in common lithium secondary batteries, without specific limitation, and particularly, separators having low resistance to the movement of electrolyte ions and excellent electrolyte impregnation capacity are preferable. Particularly, a porous polymer film, for example, a porous polymer film formed by a polyolefin-based polymer such as an ethylene homopolymer, a propylene homopolymer, an ethylene/butene copolymer, an ethylene/hexene copolymer and an ethylene/methacrylate copolymer, or a laminated structure of two or more thereof may be used. In addition, a common nonwoven fabric, for example, a non-woven fabric formed of a high melting point glass fiber, a polyethylene terephthalate fiber or the like may be used. In addition, a separator coated with and including a ceramic component or a polymer material for securing heat resistance or mechanical strength may be used, and selectively, a single layer or a multilayer structure may be used.

The electrolyte may include an organic liquid electrolyte, an inorganic liquid electrolyte, a solid polymer electrolyte, a gel-type polymer electrolyte, a solid inorganic electrolyte, a molten inorganic electrolyte or the like, which can be used during manufacturing a lithium secondary battery, without limitation. Particularly, the electrolyte may include an organic solvent and a lithium salt.

The organic solvent may use any one which may play the role of a medium for moving ions involving the electrochemical reaction of a battery, without specific limitation. Particularly, as the organic solvent, ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), ethyl methyl carbonate (EMC), ethylene carbonate (EC), and propylene carbonate (PC); alcohol-based solvents such as ethyl alcohol and isopropyl alcohol; nitriles such as R-CN (R is a hydrocarbon group of a linear, branched or cyclic structure of C2 to C20 and may include a double bond, an aromatic ring or an ether bond); amides such as dimethylformamide; dioxolanes such as 1,3-dioxolane; or sulfolanes may be used. Among them, the carbonate-based solvent is preferable, and a mixture of a cyclic carbonate having high ionic conductivity and high dielectricity for improving the charge and discharge performance of a battery (for example, ethylene carbonate or propylene carbonate), and a linear carbonate-based compound of a low viscosity (for example, ethyl methyl carbonate, dimethyl carbonate or diethyl carbonate) is more preferable. In this case, if the cyclic carbonate and the chain-type carbonate are mixed in a volume ratio of about 1:1 to about 1:9 and used, the excellent performance of the electrolyte may be exhibited.

The lithium salt may use any compounds that may provide lithium ions used in a lithium secondary battery, without specific limitation. Particularly, the lithium salt may use LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂ or the like. The concentration of the lithium salt may be in a range of 0.1 M to 2.0 M. If the concentration of the lithium salt is within the range, the electrolyte may have appropriate conductivity and viscosity to exhibit excellent electrolyte performance, and the lithium ions may move effectively.

In the electrolyte, one or more additives may be further included in addition to the constituent components of the electrolyte for the purpose of improving the lifetime characteristics of a battery, suppressing the reduction of battery capacity, and improving the discharge capacity of a battery, for example, haloalkylene carbonate-based compounds such as difluoroethylene carbonate, pyridine, triethyl phosphite, triethanolamine, cyclic ether, ethylenediamine, n-glyme, hexaphosphate, nitrobenzene derivatives, sulfur, a quinone imine dye, N-substituted oxazolidinone, N,N-substituted imidazolidine, ethylene glycol dialkyl ether, ammonium salts, pyrrole, 2-methoxyethanol or aluminum trichloride. In this case, the additive may be included in 0.1 wt% to 5 wt% on the basis of the total weight of the electrolyte.

In the lithium secondary battery including the electrode formed by using the carbon nanotube dispersion according to the present invention, particularly, a lithium secondary battery including the negative electrode formed by using the carbon nanotube dispersion, carbon nanotubes are dispersed uniformly in the negative electrode, the content thereof may be reduced compared to a case of including the conventional conductive material such as the conductive carbon black, and discharge capacity and output properties may be stably shown. As a result, the lithium secondary battery may be useful for portable devices such as a cellular phone, a laptop computer and a digital camera, and electric vehicle fields such as a hybrid electric vehicle (HEV).

Accordingly, the lithium secondary battery, a battery module including the lithium secondary battery as a unit cell, and a battery pack including the same may be provided.

The battery module or the battery pack may be used as the power source of one or more large- and medium-sized devices including: a power tool; electric motor vehicles including an electric vehicle (EV), a hybrid electric vehicle and a plug-in hybrid electric vehicle (PHEV); and a power storage system.

Hereinafter, embodiments will be explained in detail to particularly explain the present invention. However, the embodiments are for illustrating the present invention and the scope of the present invention should not be limited thereto.

### Examples

### Example 1

0.675 wt% of polyvinylpyrrolidone (PVP K15, product of Zhangzhou Huafu Chemical Co.), 0.225 wt% of sulfonated polystyrene (Nouryon Co.) and water as a dispersion medium were mixed to prepare 497 g of a mixture. In a dissolver (VMA-Getzmann Co., Dispermat-CA), an impeller and a vessel were installed and rotated at 400 rpm for 10 minutes to mix the dispersants and the dispersion medium in the mixture.

0.6 wt% of single-walled carbon nanotubes (SWCNT, TUBALL, product of OCSiAl Co.) with a specific surface area of 1,160 m²/g and a length of 5 µm or more, were injected thereto and dispersed at 8,000 rpm for 60 minutes.

The resultant was treated under a pressure of 20,000 psi five times using a high-pressure disperser (PICOMAX, Micronox Co.) to prepare a carbon nanotube dispersion.

### Example 2

A carbon nanotube dispersion was prepared by the same method as in Example 1 except for using a sulfonated styrene maleic acid copolymer instead of the sulfonated polystyrene in Example 1.

### Example 3

A carbon nanotube dispersion was prepared by the same method as in Example 1 except for changing the polyvinylpyrrolidone content to 0.750 wt%, and the sulfonated polystyrene content to 0.150 wt%, respectively, in Example 1.

### Example 4

A carbon nanotube dispersion was prepared by the same method as in Example 1 except for changing the polyvinylpyrrolidone content to 0.500 wt%, and the sulfonated polystyrene content to 0.400 wt%, respectively, in Example 1.

### Comparative Example 1

A carbon nanotube dispersion was prepared by the same method as in Example 1 except for excluding sulfonated polystyrene and changing the polyvinylpyrrolidone content to 0.9 wt% in Example 1.

### Comparative Example 2

A carbon nanotube dispersion was prepared by the same method as in Example 1 except for using polyvinyl alcohol with the same content instead of the sulfonated polystyrene in Example 1.

### Comparative Example 3

A carbon nanotube dispersion was prepared by the same method as in Example 2 except for using a styrene maleic acid copolymer instead of the sulfonated styrene maleic acid copolymer in Example 2.

### Comparative Example 4

A carbon nanotube dispersion was prepared by the same method as in Example 2 except for excluding polyvinylpyrrolidone and changing the sulfonated styrene maleic acid copolymer content to 0.9 wt% in Example 2.

### Comparative Example 5

A carbon nanotube dispersion was prepared by the same method as in Example 1 except for changing the polyvinylpyrrolidone content to 0.450 wt%, and the sulfonated polystyrene content to 0.450 wt%, respectively, in Example 1.

### Comparative Example 6

A carbon nanotube dispersion was prepared by the same method as in Example 1 except for changing the polyvinylpyrrolidone content to 0.825 wt%, and the sulfonated polystyrene content to 0.075 wt%, respectively, in Example 1.

### Comparative Example 7

A carbon nanotube dispersion was prepared by the same method as in Example 1 except for using polyacrylamide with the same content instead of the polyvinylpyrrolidone in Example 1.

### Comparative Example 8

A carbon nanotube dispersion was prepared by the same method as in Example 1 except for using polyglyceryl-3-diisostearate with the same content instead of the polyvinylpyrrolidone in Example 1.

**[Table 1]**

| | CNT cont ent | First dispersant (polymer) | | Second dispersant | | Ratio between dispers | CNT to dispe rsant |
|---|---|---|---|---|---|---|---|
| | (wt% ) | Typ e | Amount (wt%) | Type | Amount (wt%) | ants | s |
| Example 1 | 0.6 | PVP | 0.675 | Sulfonated polystyrene | 0.225 | 1:0.333 | 1:1.5 |
| Example 2 | 0.6 | PVP | 0.675 | Sulfonated styrene maleic acid copolymer | 0.225 | 1:0.333 | 1:1.5 |
| Example 3 | 0.6 | PVP | 0.750 | Sulfonated polystyrene | 0.150 | 1:0.200 | 1:1.5 |
| Example 4 | 0.6 | PVP | 0.500 | Sulfonated polystyrene | 0.400 | 1:0.800 | 1:1.5 |
| Comparative Example 1 | 0.6 | PVP | 0.900 | - | - | - | 1:1.5 |
| Comparative Example 2 | 0.6 | PVP | 0.675 | Polyvinyl alcohol | 0.225 | 1:0.333 | 1:1.5 |
| Comparative Example 3 | 0.6 | PVP | 0.675 | Styrene maleic acid copolymer | 0.225 | 1:0.333 | 1:1.5 |
| Comparative Example 4 | 0.6 | - | - | Sulfonated styrene maleic acid copolymer | 0.900 | - | 1:1.5 |
| Comparative Example 5 | 0.6 | PVP | 0.450 | Sulfonated polystyrene | 0.450 | 1:1 | 1:1.5 |
| Comparative Example 6 | 0.6 | PVP | 0.825 | Sulfonated polystyrene | 0.075 | 1:0.091 | 1:1.5 |
| Comparative Example 7 | 0.6 | PAM | 0.675 | Sulfonated polystyrene | 0.225 | 1:0.333 | 1:1.5 |
| Comparative Example 8 | 0.6 | PG-3-DIS | 0.675 | Sulfonated polystyrene | 0.225 | 1:0.333 | 1:1.5 |

| | | | | | | | |
|---|---|---|---|---|---|---|---|
| * PVP: polyvinylpyrrolidone * PAM: polyacrylamide * PG-3-DIS: polyglyceryl-3-diisostearate | | | | | | | |

### Experimental Example

The viscosity and viscosity after standing at 25°C for 1 week of the carbon nanotube dispersions of Examples 1 to 4 and Comparative Examples 1 to 8, were measured and the results are shown in Table 2 below.

The viscosity was measured at 25°C using Rotor 1 at 1 rpm using a viscometer (TV-25, product of TOKI Co.).

In addition, the particle sizes of the particles contained in the carbon nanotube dispersions of Examples 1 to 4 and Comparative Examples 1 to 8, were measured using a particle size analyzer (mastersizer 3000, product of Malvern Co.), and the results are shown in Table 2 below.

**[Table 2]**

| | CNT cont ent (wt% ) | Viscosity (cP) | | | D50 (µm) | D90 (µm) | Ratio between dispers ants | CNT to dispe rsant s |
|---|---|---|---|---|---|---|---|---|
| | | After disper sion | Viscos ity after 1 week | Visco sity incre asing ratio (%) | | | | |
| Example 1 | 0.6 | 7,200 | 8,300 | 15.3 | 2.4 | 11.7 | 1:0.333 | 1:1.5 |
| Example 2 | 0.6 | 9, 000 | 10,000 | 11.1 | 4.8 | 8.9 | 1:0.333 | 1:1.5 |
| Example 3 | 0.6 | 10,000 | 11,000 | 10 | 3.4 | 8.7 | 1: 0.2 | 1:1.5 |
| Example 4 | 0.6 | 8,500 | 9,400 | 10.6 | 2.2 | 10.7 | 1: 0.8 | 1:1.5 |
| Comparative Example 1 | 0.6 | 12,000 | 14.600 | 21.7 | 5.9 | 9.7 | - | 1:1.5 |
| Comparative Example 2 | 0.6 | 11, 100 | 11,300 | 1.81 | 11.1 | 19.9 | 1:0.333 | 1:1.5 |
| Comparative Example 3 | 0.6 | 9,700 | 17,400 | 79.4 | 16.5 | 26.7 | 1:0.333 | 1:1.5 |
| Comparative Example 4 | 0.6 | 10,200 | 12,300 | 20.6 | 18.6 | 41.6 | - | 1:1.5 |
| Comparative Example 5 | 0.6 | 11,200 | 14,000 | 25 | 10.0 | 21.1 | 1:1 | 1:1.5 |
| Comparative Example 6 | 0.6 | 12,200 | 15,000 | 23.0 | 8.2 | 16.7 | 1:0.091 | 1:1.5 |
| Comparative Example 7 | 0.6 | 13,300 | 15,900 | 19.5 | 22.5 | 46.2 | 1:0.333 | 1:1.5 |
| Comparative Example 8 | 0.6 | Impossible to measure viscosity | | | 30.0 | 77.9 | 1:0.333 | 1:1.5 |

Referring to Table 2 above, in Examples 1 to 5, the viscosity of the carbon nanotube dispersions showed a low level even after standing at 25°C for 1 week and showed a low viscosity increasing ratio, and at the same time, showed a small level of the particle sizes of particles contained in the carbon nanotube dispersions. On the contrary, in Comparative Examples 1 to 8, at least one of the viscosity increasing ratio of the carbon nanotube dispersion or the particle size of the particles contained in the carbon nanotube dispersion showed a large value, or the measurement of the viscosity itself gave impossible results. Particularly, in case of Comparative Example 1 including only PVP, the viscosity increasing ratio of the carbon nanotube dispersion and the particle size of the particles contained in the carbon nanotube dispersion were lower than those of Examples 1 to 5. In cases of Comparative Examples 2 and 3, though the second dispersant was applied together, polyvinyl alcohol and a styrene maleic acid copolymer other than the polymer compound containing both a sulfonyl group and styrene, were applied, and the increase of the particle sizes of particles contained in the carbon nanotube dispersions and the viscosity increasing ratios of the carbon nanotube dispersions, and the particle sizes of the particles showed inferior results. In addition, in Comparative Example 4, only the second dispersant was applied, and the increase of the viscosity increasing ratio of the carbon nanotube dispersion and the particle size of particles showed inferior results.

Meanwhile, in cases of Comparative Examples 5 and 6, though PVP and sulfonated polystyrene were included together as in Example 1, the increase of the viscosity increasing ratio of the carbon nanotube dispersions and the particle sizes of particles showed inferior results. In Comparative Example 5, the sulfonated polystyrene was used in a relatively large amount, and in Comparative Example 6, on the contrary, the sulfonated polystyrene was used in a relatively small amount. Through this, it was confirmed that even though an appropriate type of a dispersant was used together, the dispersion effect could be increased only if the appropriate mixing ratio was satisfied.

Finally, in cases of Comparative Examples 7 and 8, a component not having a cyclic amide group was used as the first dispersant. In case of Comparative Example 7, it was confirmed that high viscosity and high viscosity change ratio were exhibited, and at the same time, the particle size of particles in the dispersion was large, and in Comparative Example 8, the dispersion did not occur smoothly to the extent that the measurement of the viscosity itself was impossible. From this, it was confirmed that the dispersion of the present invention exhibits excellent dispersibility and stability as a result of using specific types of the first dispersant and second dispersant in combination in a specific ratio.

## Claims

1. A carbon nanotube dispersion comprising carbon nanotubes, a dispersant and a dispersion medium, wherein
the dispersant comprises a first dispersant and a second dispersant in a weight ratio of 100:10 to 100:90,
the first dispersant is a dispersant comprising a cyclic amide group, the second dispersant is a polymer compound comprising both a sulfonyl group and styrene, and
a weight ratio of the carbon nanotubes and the dispersant is 100:50 to 100:500.

2. The carbon nanotube dispersion according to claim 1, wherein a specific surface area (BET) of the carbon nanotubes is 800 m²/g or more.

3. The carbon nanotube dispersion according to claim 1, wherein the carbon nanotubes are single-walled carbon nanotubes.

4. The carbon nanotube dispersion according to claim 1, wherein 0.1 parts by weight to 5 parts by weight of the carbon nanotubes are comprised on the basis of 100 parts by weight of the carbon nanotube dispersion.

5. The carbon nanotube dispersion according to claim 1, wherein the first dispersant is one or more selected from the group consisting of polyvinylpyrrolidone, poly-N-vinyl-5-methoxazolidon, polyvinylaziridinone, polyvinylazetidinone, polyvinylpiperidone, polyvinylcaprolactam, poly(3-methylene-2-pyrrolidone), poly(N-methyl-3-methylene-2-pyrrolidone) and polyvinylphthalimide.

6. The carbon nanotube dispersion according to claim 1, wherein the second dispersant is one or more selected from the group consisting of polystyrene sulfonic acid, salts of polystyrene sulfonic acid and sulfonate styrene-maleic acid copolymers.

7. The carbon nanotube dispersion according to claim 1, wherein the second dispersant is one or more selected from the group consisting of sulfonated polystyrene, sulfonated styrene maleic acid copolymers, sodium polystyrenesulfonate, polystyrene sulfonic acid, and ammonium polystyrenesulfonate.

8. The carbon nanotube dispersion according to claim 1, wherein the dispersant comprises the first dispersant and the second dispersant in a weight ratio of 100:20 to 100:80.

9. The carbon nanotube dispersion according to claim 1, wherein a weight ratio of the carbon nanotubes and the dispersant is 100:100 to 100:250.

10. The carbon nanotube dispersion according to claim 1, wherein the dispersion medium is one or more selected from the group consisting of an amide-based polar organic solvent, an alcohol-based solvent, a glycol-based solvent, a glycol ether-based solvent, a ketone-based solvent, an ester-based solvent, and an aqueous solvent.

11. The carbon nanotube dispersion according to claim 1, wherein a viscosity increasing ratio of the carbon nanotube dispersion after standing for 1 week at 25°C is 20% or less.

12. The carbon nanotube dispersion according to claim 1, wherein the carbon nanotube dispersion comprises carbon nanotube aggregated particles with an average particle size (D50) of 0.5 µm to 5.4 µm.

13. The carbon nanotube dispersion according to claim 1, wherein the carbon nanotube dispersion comprises carbon nanotube aggregated particles with an average particle size (D90) of 1.5 µm to 15.0 µm.

14. An electrode slurry composition for a lithium secondary battery, the composition comprising the carbon nanotube dispersion according to claim 1 and an electrode active material.

15. A method for preparing the carbon nanotube dispersion of claim 1, the method comprising:
(1) a step of mixing carbon nanotubes, a dispersant and a dispersion medium to prepare a mixture; and
(2) a step of dispersing the mixture, wherein
the dispersant comprises a first dispersant and a second dispersant in a weight ratio of 100:10 to 100:90,
the first dispersant is a dispersant comprising a cyclic amide group, the second dispersant is a polymer compound comprising both a sulfonyl group and styrene, and
a weight ratio of the carbon nanotubes and the dispersant is 100:50 to 100:500.
